Europäisches Patentamt

European Patent Office

Office européen des brevets

(11) Numéro de publication : **0 468 849 A1**

# DEMANDE DE BREVET EUROPEEN

(21) Numéro de dépôt : **91401963.3**

(22) Date de dépôt : **15.07.91**

(51) Int. Cl.⁵ : **B65D 51/00, B65D 41/04**

(30) Priorité : **24.07.90 FR 9009422**

(43) Date de publication de la demande :
**29.01.92 Bulletin 92/05**

(84) Etats contractants désignés :
**DE ES GB IT**

(72) Inventeur : **Journee, Maurice**
**Le Bois Hédouin**
**F-60240 Reilly (FR)**

(74) Mandataire : **Lemaire, Marc**
**VALEO Service Propriété Industrielle 30, rue**
**Blanqui**
**F-93406 Saint-Ouen Cédex (FR)**

(71) Demandeur : **PAUL JOURNEE S.A.**
**1, Bd Charles de Gaulle**
**F-92707 Colombes Cedex (FR)**

(54) **Bouchon de réservoir indexable, notamment de carburant pour véhicule automobile.**

(57)  Un bouchon de réservoir se compose habituellement d'un couvercle de fermeture (3) d'une tubulure de remplissage (2) et présentant un fût (5), des moyens d'étanchéité (6) et des moyens de verrouillage (7).

Selon l'invention, le fût (5) et le couvercle (3) portent des moyens d'indexation (24,27) aptes à coopérer entre eux.

EP 0 468 849 A1

Jouve, 18, rue Saint-Denis, 75001 PARIS

FIG.1

La présente invention se rapporte à un bouchon de réservoir, notamment de carburant pour véhicule automobile.

Il est déjà connu de disposer d'un bouchon de réservoir apte à obturer l'entrée d'une tubulure de remplissage d'un réservoir et comportant un couvercle de fermeture muni de moyens de préhension pour le verrouillage/déverrouillage du bouchon par rapport à la tubulure, ledit couvercle se poursuivant axialement en direction de la tubulure de remplissage par un fût sur lequel sont montés fixes à rotation des moyens d'étanchéité aptes à venir fermer l'entrée de ladite tubulure et des moyens de verrouillage/déverrouillage du bouchon par rapport à cette tubulure, les moyens d'étanchéité, les moyens de verrouillage/déverrouillage, le fût porté par le couvercle étant fixes en rotation les uns par rapport aux autres.

Les moyens d'étanchéité sont formés par un fourreau entourant de manière fixe en rotation le fût et portant une plaque d'étanchéité venant s'appuyer sur l'entrée de la tubulure.

Les moyens de verrouillage/déverrouillage peuvent être formés par un vissage du bouchon de réservoir sur la tubulure de remplissage ou par une coopération de cette tubulure avec ce bouchon, par un montage du type à baïonnettes dans lequel il est prévu que des pattes saillantes à partir du bouchon, et plus particulièrement à partir du fourreau susmentionné en étant immobilisées en rotation avec celui-ci, viennent coopérer avec des ouvertures prévues sur ladite tubulure.

Dans les deux cas de verrouillage, ce type de bouchon présente l'inconvénient de ne pas pouvoir orienter le couvercle de fermeture de manière à ce que celui-ci occupe systématiquement la même place radiale lors du verrouillage du bouchon.

Cet inconvénient n'est pas sans importance dans le sens où il peut être nécessaire d'orienter ce couvercle de fermeture radialement, lorsque celui-ci porte un élément décoratif ou un marquage ou que ce couvercle de fermeture présente un élément ornemental ou des moyens de préhension tels que des ailettes saillantes à partir de la surface du couvercle de fermeture devant rentrer obligatoirement dans un environnement de la carrosserie.

La présente invention se propose de remédier à l'inconvénient ci-dessus mentionné en présentant un bouchon de réservoir possédant un couvercle de fermeture pouvant être orienté par rapport aux moyens de verrouillage.

Selon la présente invention, un bouchon de réservoir, notamment de carburant pour véhicule automobiles comprenant un couvercle de fermeture se prolongeant par un fût apte à porter des moyens d'étanchéité et des moyens de verrouillage/déverrouillage, est caractérisé en ce que le couvercle et le fût portent des moyens d'indexation aptes à coopérer entre eux..

Grâce à l'invention, le fût porte fixe en rotation les moyens d'étanchéité et les moyens de verrouillage/déverrouillage qui positionnent, de manière certaine, le sous-ensemble formé par ces trois pièces, lors de la fin de l'opération de verrouillage, et le couvercle peut être positionné de la manière souhaitée par rapport au sous-ensemble susmentionné.

Les autres caractéristiques et avantages de l'invention vont ressortir maintenant de la description qui va suivre donnée à titre d'exemple et en se référant aux dessins annexés sur lesquels :

– la figure 1 est une vue en coupe montrant le bouchon de réservoir selon l'invention ;

– la figure 2 est une vue en coupe partielle selon la ligne AA de la figure 1.

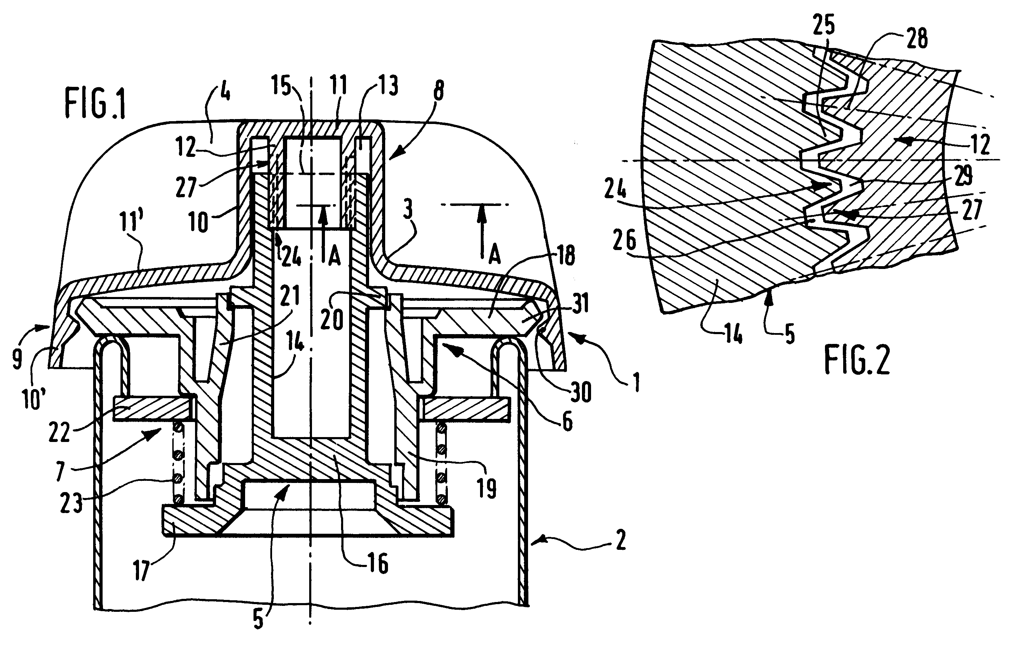

En se référant à la figure 1, un bouchon de réservoir 1 est apte à obturer l'entrée d'une tubulure de remplissage 2, notamment pour réservoir de carburant de véhicule automobile.

Le bouchon de réservoir comporte un couvercle de fermeture 3 muni de moyens de préhension 4, tels que des ailes s'érigeant à partir de la surface externe de ce couvercle, ledit couvercle présentant, en direction de l'entrée de la tubulure 2, un fût 5 portant des moyens d'étanchéité 6 et des moyens de verrouillage/déverrouillage 7 dudit bouchon sur ladite tubulure.

Comme mieux visible sur la figure 1, le couvercle de fermeture 3 présente deux volumes cylindriques creux 8 et 9, disposés axialement l'un à la suite de l'autre en communiquant entre eux, le volume 8, dénommé ci-après volume supérieur, est apte à porter le fût 5 alors que le volume 9, dénommé volume inférieur, reçoit les moyens d'étanchéité 6 et de verrouillage/déverrouillage 7.

Le volume supérieur 8, de plus petit diamètre, présente un paroi cylindrique latérale 10, circonférentiellement continue, à l'une des extrémités de laquelle est prévu un fond 11, l'autre des extrémités étant ouverte et communiquant avec le volume inférieur 9 qui présente une paroi de fond 11' de diamètre suffisant pour recouvrir l'entrée de la tubulure 2 et une paroi latérale circonférentielle 10' entourant à distance ladite tubulure.

A partir du fond 11 du volume supérieur 8 et orthogonalement à celui-ci, est issue une paroi cylindrique 12 saillante vers le volume inférieur 9 et disposée à distance de la paroi latérale 10 du volume 8, de manière à laisser subsister un espace annulaire libre 13.

La paroi cylindrique 12 est apte à coopérer avec le fût 5.

Le fût 5 a une forme de cylindre creux à paroi latérale circulaire 14 présentant une extrémité ouverte 15 en direction du volume supérieur 8 et une paroi de fond 16 opposée à l'extrémité 15 en étant disposé à l'autre extrémité du fût 5 et se poursuivant par une paroi d'extrémité 17 dont le rôle sera explicité par la suite.

Autour du fût 5 est prévu un moyen d'étanchéité 6 constitué ici d'une plaque d'étanchéité 18 sensiblement plane et circulaire et de dimensions telles qu'elle soit apte à obturer l'entrée de la tubulure 2, ladite plaque se poursuivant axialement en direction de la tubulure par un fourreau 19 immobilisé en translation entre la paroi d'extrémité 17 du fût 5 et un épaulement 20 prévu à partir de la paroi cylindrique du fût 5. Le fourreau 18 présente également une multiplicité de languettes élastiquement radiales 21 permettant le montage dudit fourreau autour dudit fût en immobilisant axialement ainsi l'ensemble formé par la plaque d'étanchéité 17 et le fourreau 18 tout en l'immobilisant également en rotation par rapport au fût 4, la plaque 18 et le fourreau 19 étant monobloc.

Sur la paroi externe du fourreau 19 sont montés des moyens de verrouillage 7 consistant ici en deux pattes 22 saillantes vers la paroi de la tubulure et pénétrant dans des ouvertures (non représentées) de la tubulure 2 pour un verrouillage du type à baïonnettes, ces pattes 22 étant bien entendu immobilisées en rotation par rapport au fourreau 19 mais pouvant être déplacées axialement le long de l'axe du fourreau sous l'action, soit d'un ressort 23, soit sous l'action des rampes que présente la tubulure pour le montage à baïonnettes.

Ainsi le sous-ensemble formé par le fût 5, le fourreau 19 et sa plaque d'étanchéité 18, et les pattes saillantes 21 présentent des pièces immobilisées en rotation les unes par rapport aux autres.

Ainsi, comme il est connu, lors de l'opération de verrouillage le sous-ensemble ci-dessus mentionné occupera une position radiale bien définie.

En se référant en plus à la figure 2, le couvercle 3 est indexé par rapport au sous-ensemble précédemment défini et plus particulièrement par rapport aux pattes de verrouillage 22 qui conditionnent le positionnement radial de ce sous-ensemble sur la tubulure 2.

Pour réaliser cette indexation, le couvercle 3 et le fût 5 portent des moyens d'indexation aptes à coopérer entre eux.

Pour ce faire, l'extrémité ouverte 15 du fût 5 présente, sur la face interne de sa paroi 14, un premier moyen d'indexation tel qu'un secteur cranté 24 constitué par une multiplicité de nervures axiales 25 disposées circonférentiellement et s'érigeant radialement en laissant subsister entre elles des rainures 26, de même disposition que celle des nervures. Le secteur cranté 24, s'étendant ici sur toute la périphérie interne du fût 5, est apte à coopérer avec un deuxième moyen d'indexation tel qu'un secteur cranté 27, porté ici sur la périphérie externe de la paroi cylindrique 12, ce secteur cranté 27 étant constitué également de nervures 28 et de rainures 29 aptes à coopérer complémentairement avec les rainures 26 et les nervures 25 du fût 5 disposées circonférentiellement sur la paroi cylindrique 12 issue de la paroi de fond 11 du volume supérieur 8.

Il est facilement compréhensible que, pour pouvoir indexer le couvercle 3 en fonction du sous-ensemble susmentionné, il suffit de faire coopérer de manière adéquate le secteur cranté 27 porté par la paroi 12 et le secteur cranté 24 porté par le fût 5 et d'immobiliser par la suite le couvercle en translation axiale pour autoriser son indexage par rapport au fût, cette immobilisation se faisant par coopération de protubérances 30 saillant à partir de la face interne de la paroi 10' et vers l'intérieur du volume inférieur 9 et venant coopérer avec un prolongement 31 de la plaque d'étanchéité 18.

Ainsi, il est possible d'indexer radialement le couvercle par rapport au sous-ensemble déjà mentionné, et plus particulièrement par rapport aux pattes de fixation 21 qui conditionnent le positionnement de l'ensemble, et cela de manière très précise, puisque la variation du positionnement radial dépend de l'angle défini entre deux nervures successives, ici l'angle est d'environ 8°.

La présente invention n'est pas limitée à. l'exemple de réalisation décrit ci-dessus mais englobe toutes variantes.

Notamment, il peut être prévu qu'un secteur cranté soit disposé sur la face interne de la paroi latérale 10 en coopérant avec un secteur cranté disposé sur la face externe du fût 4 en supprimant, de ce fait, la paroi latérale 12.

De même, jusqu'à maintenant, il a été prévu que les secteurs crantés 24 et 27 s'étendent sur toute la périphérie des pièces à relier en rotation, mais il peut être envisagé que l'une des deux pièces ne porte qu'un secteur cranté s'étendant partiellement en direction circonférentielle, alors que l'autre des pièces porte un secteur cranté s'étendant circonférentiellement en totalité.

## Revendications

1) Bouchon de réservoir, notamment de carburant pour véhicule automobile, comprenant un couvercle de fermeture (3) se prolongeant par un fût (5) apte à porter des moyens d'étanchéité (6) et des moyens de verrouillage (7), caractérisé en ce que le couvercle (3) et le fût (5) portent des moyens d'indexation (24,27) aptes à coopérer entre eux.

2) Bouchon de réservoir selon la revendication 1, caractérisé en ce que les moyens d'indexation sont formés par des secteurs crantés (24,27).

3) Bouchon de réservoir selon la revendication 2, caractérisé en ce que les secteurs crantés (24,27) s'étendent circonférentiellement en totalité.

4) Bouchon de réservoir selon la revendication 2, caractérisé en ce que l'un (24 ou 27) des secteurs crantés s'étend circonférentiellement en totalité alors que l'autre (27 ou 24) s'étend circonférentiellement en partie.

**5)** Bouchon de réservoir selon l'une des revendications précédentes, caractérisé en ce que le secteur cranté (24) est porté par la paroi interne du fût (5) et le secteur denté (27) est porté par une paroi circulaire (12) issue du couvercle de fermeture (3).

**6)** Bouchon de réservoir selon l'une des revendications 1 à 4, caractérisé en ce que le secteur denté (24) est porté par le couvercle de fermeture (3) alors que le secteur denté (27) est porté par la paroi externe du fût (4).

**7)** Bouchon de réservoir selon l'une des revendications précédentes, caractérisé en ce que le couvercle (3) présente des moyens d'immobilisation en translation axiale verrouillant son indexage.

**8)** Bouchon de réservoir selon la revendication 7, caractérisé en ce que les moyens d'immobilisation se présentent sous la forme d'une protubérance (30) issue du couvercle coopérant avec un prolongement (31) issu de la plaque d'étanchéité (18).

FIG.1

FIG.2

EP 0 468 849 A1

Office européen
des brevets

**RAPPORT DE RECHERCHE EUROPEENNE**

Numero de la demande

EP  91 40 1963

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 049 124 (FORD MOTOR CO., LTD) <br> * Page 3, ligne 26 – page 4, ligne 22; fig. * <br> --- | 1-8 | B 65 D 51/00 <br> B 65 D 41/04 |
| Y | DE-A-3 007 985 (EAU DE COLOGNE- & PARFÜMERIE-FABRIK GLOCKENGASSE 4711 – KÖLN) <br> * Page 10, ligne 14 – page 12, ligne 4; figures 4,5 * <br> --- | 1-6 | |
| Y | DE-A-2 257 911 (FINKE) <br> * Page 3, ligne 15 – page 4, dernière ligne; fig. * <br> ----- | 1-3,7-8 | |

DOMAINES TECHNIQUES RECHERCHES (Int. Cl.5)

B 65 D

Le présent rapport a été établi pour toutes les revendications

| Lieu de la recherche | Date d'achèvement de la recherche | Examinateur |
|---|---|---|
| LA HAYE | 16-10-1991 | MARTENS L.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

........................................................................

& : membre de la même famille, document correspondant

EPO FORM 1503 03.82 (P0402)